# EUROPEAN PATENT APPLICATION

(11) **EP 3 579 399 A1**
(43) Date of publication of application: **11.12.2019**
(21) Application number: 19177819.0
(22) Date of filing: 03.06.2019
(51) Int. Cl.: H02P 3/18

(54) **BRUSHLESS DC MOTOR CONTROL METHOD AND CONTROL DEVICE**

(30) Priority: 06.06.2018 JP 2018108439
(71) Applicant: Nidec Sankyo Corporation, Nagano 393-8511 (JP)
(72) Inventor: KARASAWA, Toshiyuki, Nagano, 393-8511 (JP); YAHATA, Akihiro, Nagano, 393-8511 (JP); MOMOSE, Tetsuo, Nagano, 393-8511 (JP)
(74) Representative: Becker Kurig Straus

(57) **Abstract**

To prevent PWM drive from unnecessarily switching to one-side PWM drive to reduce heat generation and energy loss when a brushless DC motor is PWM driven. A rotational speed of a motor (1) is detected and a speed reduction rate is evaluated based on the detected rotational speed, a current mode is transitioned to a deceleration mode when the speed reduction rate is equal to or greater than a first threshold value, the deceleration mode is released when the speed reduction rate is less than the first threshold value, and the PWM drive is switched to the one-side PWM drive to drive the motor (1) when a power supply voltage to be used for driving the motor (1) reaches equal to or greater than a second threshold value during the deceleration mode.

## Description

### BACKGROUND

### Field of the Invention

At least an embodiment of the present invention relates to a method of controlling a brushless direct current (DC) motor and a control device therefor.

### Description of the Related Documents

A brushless DC motor is driven via an inverter circuit coupled to a DC power supply, and a voltage applied to a motor coil is generally controlled by pulse width modulation (PWM). Generally, the inverter circuit configured to drive a three-phase brushless DC motor is configured so that for each of motor phases (referred to as "U-phase", "V-phase", and "W-phase"), a high-side (upper) transistor coupled to a power supply line and a low-side (lower) transistor coupled to a ground point are coupled in series, and a coupling point of the both transistors is coupled with a coil of the corresponding phase of the motor. Each of the transistors is provided in parallel with a flywheel diode for feeding back a back electromotive force of the motor. For example, a power field effect transistor (power FET) is used as the transistor. In the following description, a flow of current from an A-phase coil to a B-phase coil in the motor will be expressed as "A -> B". When the motor is driven by the inverter circuit, the current is supplied to each of the coils of the motor by PWM control such that at a certain timing, the current flows from a U-phase coil of the motor to a V-phase coil (that is, U -> V), at the next timing U -> W, at the next timing, V -> W and so on, and a rotating magnetic field is formed in the motor to rotate the motor.

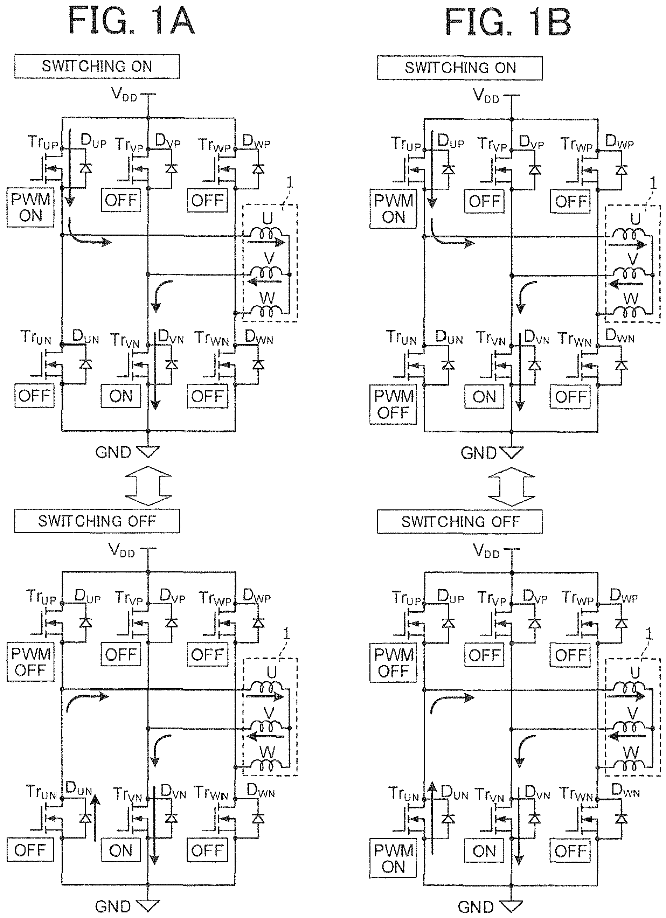

Since the PWM drive is employed, a state where the current is supplied from the DC power supply to the motor via the inverter circuit and a state where the current is not supplied alternately exist, but the current continues to flow through the motor coil by self-induction even if a state where the current is supplied from the DC power is switched to a state where the current is not supplied. The PWM drive has two forms including one-side PWM drive and synchronous rectification PWM drive, employed based on a path where the current flows. FIGS. 1A and 1B are diagrams each explaining one of such forms of the PWM drive, where FIG. 1A illustrates the one-side PWM drive and FIG. 1B illustrates the synchronous rectification PWM drive. A motor 1 being a three-phase brushless DC motor includes U-phase, V-phase, and W-phase coils, and one ends of the coils are coupled in common. In the U-phase, between a power supply line to which a power supply voltage V_{DD} is supplied and a ground point GND, a high-side transistor Tr_{UP} and a low-side transistor Tr_{UN} are coupled in series from the side of the power supply line, and a coupling point of the transistors Tr_{UP}, Tr_{UN} is coupled with the other end of the U-phase coil. Further, diodes D_{UP}, D_{UN} being flywheel diodes are provided in parallel for the transistors Tr_{UP}, Tr_{UN}, respectively. In FIGS. 1A and 1B, signal lines coupled to gates of the transistors Tr_{UP}, Tr_{UN} to drive the transistors Tr_{UP}, Tr_{UN} are not illustrated. Likewise, in the V-phase, transistors Tr_{VP}, Tr_{VN}, and diodes D_{VP}, D_{VN} are provided, and in the W-phase, transistors Tr_{WP}, Tr_{WN}, and diodes D_{WP}, D_{WN} are provided.

When the current flows, for example, U -> V in the motor 1, switching for the PWM drive may be performed in either the U-phase high-side transistor Tr_{UP} or the V-phase low-side transistor Tr_{VN}, and here, the switching is performed in the U-phase high-side transistor Tr_{UP}. As a result of the switching for the PWM drive, the transistor Tr_{UP} will repeat an ON state, that is, a conduction state, and an OFF state, that is, a cut-off state. At a timing for operating the U-phase high-side transistor Tr_{UP} by the PWM drive, the V-phase low-side transistor Tr_{VN} is in the ON state (as indicated by "PWM ON"), and the remaining transistors Tr_{UN}, Tr_{VP}, Tr_{WP}, and Tr_{WN} are all in the OFF state. At this time, the same current path is used in the one-side PWM drive and in the synchronous rectification PWM drive, and is indicated by a bold arrow in upper circuit diagrams in FIGS. 1A and 1B.

On the other hand, if the U-phase high-side transistor Tr_{UP} is turned off (as indicated by "PWM OFF"), in the one-side PWM drive, states of the transistors other than the transistor Tr_{UP} are not changed, and thus, the U-phase low-side transistor Tr_{UN} also remains in the OFF state. Therefore, as illustrated in FIG. 1A, a current flowing from the U-phase and V-phase coils of the motor 1 through the inverter circuit when the transistor Tr_{UP} is turned off will be fed back via a V-phase low-side transistor Tr_{VN} in the ON state and a diode D_{UN} provided in parallel to the U-phase low-side transistor Tr_{UN}. A diode generally has a relatively large forward resistance as compared to a transistor in the conduction state, and thus, in the one-side PWM drive, heat is generated due to the current flowing through a diode during the switching off. The heat generation is equivalent to an energy loss in the motor 1. Therefore, to reduce the energy loss in the motor 1, in the synchronous rectification PWM drive illustrated in FIG. 1B, at a timing at which the U-phase high-side transistor Tr_{UP} is turned off by the PWM drive, the U-phase low-side transistor Tr_{UN} is turned on by the PWM drive. As a result, the current by the self-induction of the motor 1 flows through the transistor Tr_{UN} rather than through the diode D_{UN}. The PWM drive of the transistor Tr_{UN} is executed based on a gate signal having an inverse logic of the PWM drive of the transistor Tr_{UP}. Generally, an ON resistance of the transistor Tr_{UN} is smaller than a forward resistance of the diode D_{UN}, and thus, the heat generation can be suppressed in the synchronous rectification PWM drive, and the loss of energy of the motor 1 can be suppressed accordingly.

However, in the synchronous rectification PWM drive, if the motor decelerates due to a load fluctuation and the like or a speed command to the motor, a regenerative current flowing through the motor coil flows back toward the power supply side, and as a result, the power supply voltage may increase to damage a control circuit configured to drive and control the motor, an electronic device included in the inverter circuit, and the like. Therefore, the one-sided PWM drive and the synchronous rectification PWM drive are switched as described above, based on a drive state of the motor. Japanese Unexamined Patent Application Publication No. 2002-172162 (hereinafter, referred to as "Patent Literature 1") discloses a technology in which the synchronous rectification PWM drive is used if the motor is accelerated or operated at a constant rotational speed, and the one-side PWM drive is used to prevent a power supply voltage rise due to a regenerative current if the motor is decelerated. Japanese Unexamined Patent Application Publication No. 2008-072788 (hereinafter, referred to as "Patent Literature 2") discloses a technology in which the synchronous rectification PWM drive is switched to the one-side PWM drive if a power supply voltage reaches equal to or greater than a predetermined value and the one-side PWM drive is switched to the synchronous rectification PWM drive if it is detected that the rotational speed of the motor is within a target speed range.
Patent Literature 1: Japanese Unexamined Patent Application Publication No. 2002-172162
Patent Literature 2: Japanese Unexamined Patent Application Publication No. 2008-072788

### SUMMARY

The power supply voltage may also rise due to a factor other than a backflow of the regenerative current from the motor, the factor including a voltage fluctuation caused by a factor at a power supply side. Generally, the rise of the power supply voltage due to a factor other than the backflow of the regenerative current is so small that there is only a small possibility to damage an equipment, an electronic device, and the like. Even if the regenerative current flows back to the power supply, the power supply voltage may not rise depending on a condition of another load coupled to the power supply. In a control method described in Patent Literature 2, the synchronous rectification PWM drive is switched to the one-side PWM drive even if the power supply voltage reaches equal to or greater than a predetermined value due to a factor other than the regenerative current, and as a consequence, an unnecessary switching will be performed, resulting in an increase in heat generation and energy loss.

An object of at least an embodiment of the present invention is to provide a method of controlling a brushless DC motor capable of preventing an unnecessary switching to one-side PWM drive to reduce heat generation and energy loss, and to provide also a control device therefor.

A control method of at least an embodiment of the present invention is a control method of controlling a voltage to be applied to a coil of each phase of a motor being a brushless DC motor by PWM drive, including: detecting a power supply voltage to be used for driving the motor; detecting a rotational speed of the motor; evaluating a speed reduction rate, based on the detected rotational speed, transitioning to a deceleration mode when the speed reduction rate is equal to or greater than a first threshold value, releasing the deceleration mode when the speed reduction rate is less than the first threshold value; and switching the PWM drive to one-side PWM drive when the power supply voltage reaches equal to or greater than a second threshold value during the deceleration mode to drive the motor.

A control device according to at least an embodiment of the present invention is a control device for controlling a voltage to be applied to a coil of each phase of a motor being a brushless DC motor by PWM drive, including: a power supply voltage detector configured to detect a power supply voltage to be used for driving the motor; and a controller configured to evaluate a speed reduction rate, based on a detected rotational speed of the motor, transition to a deceleration mode when the speed reduction rate is equal to or greater than a first threshold value, release the deceleration mode when the speed reduction rate is less than the first threshold value, and switch the PWM drive to one-side PWM drive when the power supply voltage reaches equal to or greater than a second threshold value during the deceleration mode to drive the motor.

In at least an embodiment of the present invention, while the deceleration mode is set when a speed change rate in the rotational speed of the motor is equal to or greater than a first threshold value, and the deceleration mode is released when the speed change rate reaches less than the first threshold value, the PWM drive is switched to the one-side PWM drive when the power supply voltage reaches equal to or greater than a second threshold value during the deceleration mode, and therefore, even when the power supply voltage rises while the motor is not decelerating, the PWM drive will not be switched to the one-side PWM drive. This makes it possible to prevent an unnecessary switching to the one-sided PWM drive to reduce heat generation and energy loss.

In at least an embodiment of the present invention, a terminal voltage of a coil of at least one phase of the motor may be detected to detect the rotational speed of the motor. At least an embodiment of the present invention can also apply to a sensorless brushless DC motor not including a Hall element sensor or the like configured to detect a rotor position of the motor by detecting the rotational speed by the terminal voltage of the coil.

In at least an embodiment of the present invention, the rotational speed is detected for each sampling to calculate a speed reduction amount, and the speed reduction amount is used as the speed reduction rate. With this configuration, to set and release the deceleration mode, a difference in rotational speed between two samplings may simply be evaluated. More specifically, the motor can be driven and controlled by using a microprocessor configured to acquire the rotational speed for each sampling. As a result, a finer control of the brushless DC motor can be realized.

According to at least an embodiment of the present invention, it is possible to prevent an unnecessary switching to one-side PWM drive while controlling a voltage to be applied to a coil of each phase of a brushless DC motor by PWM drive to reduce heat generation and energy loss.

### BRIEF DESCRIPTION OF THE DRAWINGS

Embodiments will now be described, by way of example only, with reference to the accompanying drawings which are meant to be exemplary, not limiting, and wherein like elements are numbered alike in several Figures, in which:
FIGS. 1A and 1B are circuit diagrams, where FIG. 1A is a circuit diagram explaining one-side PWM drive and FIG. 1B is a circuit diagram explaining synchronous rectification PWM drive;
FIG. 2 is a block diagram illustrating a configuration of a control device according to one embodiment of the present invention; and
FIG. 3 is a diagram explaining an operation of the control device illustrated in FIG. 2.

### DETAILED DESCRIPTION

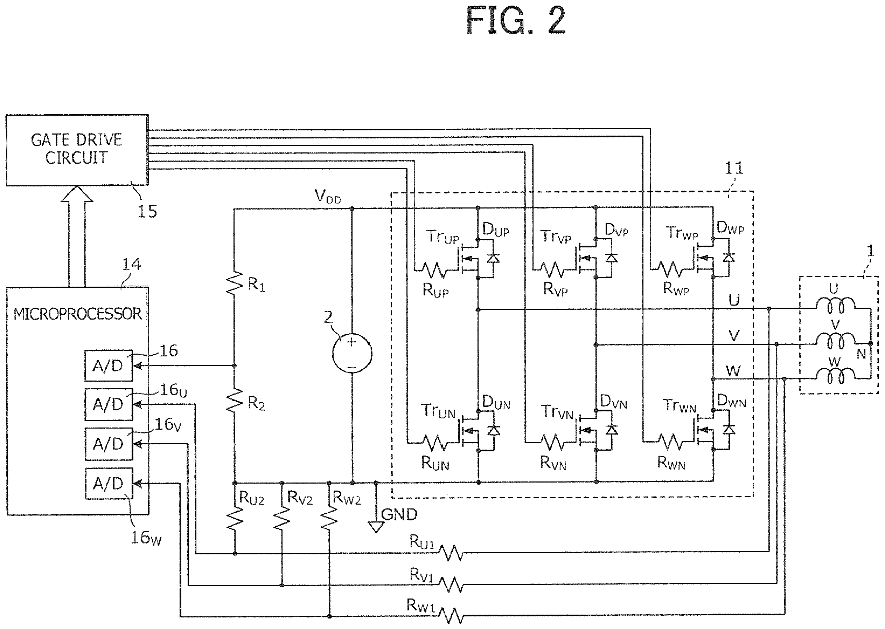

Now an embodiment of the present invention will be described with reference to the drawings. FIG. 2 is a block diagram illustrating a configuration of a control device according to one embodiment of the present invention. This control device is configured to drive a motor 1 being a three-phase brushless DC motor by power from a DC power supply 2. The DC power supply 2 generates a power supply voltage V_{DD} from one end of the DC power supply 2, and the other end thereof is coupled to a ground point GND. The motor 1 includes three-phase (U-phase, V-phase, and W-phase) coils coupled by a Y connection (star connection), and in FIG. 2, a point N is a neutral point at which one ends of the three-phase coils are coupled in common.

The control device includes an inverter circuit 11 coupled to the DC power supply 2, the inverter circuit 11 being configured to drive the motor 1 with a rectangular wave, a microprocessor 14 configured to perform a control operation on the motor 1 by a software process to generate a command value for the inverter circuit 11, and a gate drive circuit 15 provided between the microprocessor 14 and the inverter circuit 11, the gate drive circuit 15 being configured to convert the command value from the microprocessor 14 into a drive signal for the inverter circuit 11. The microprocessor 14 drives the inverter circuit 11 via the gate drive circuit 15 thereby to PWM drive each of the coils of the motor 1. The inverter circuit 11 is equivalent to the inverter circuit illustrated in FIG. 1 including the connection form with the motor 1, and includes U-phase transistors Tr_{UP}, Tr_{UN} and U-phase diodes D_{UP}, D_{UN}, V-phase transistors Tr_{VP}, Tr_{VN} and V-phase diodes D_{VP}, D_{VN}, as well as W-phase transistors Tr_{WP}, Tr_{WN} and W-phase diodes D_{WP}, D_{WN}.

In the U-phase, a drain of the high-side transistor Tr_{UP} is supplied with a power supply voltage V_{DD}, a source of the transistor Tr_{UP} is coupled with a drain of the low-side transistor Tr_{UN} and with the U-phase coil of the motor 1, and a source of the transistor Tr_{UN} is coupled to the ground point GND. A cathode and an anode of the diode D_{UP} are coupled to the drain and the source of the high-side transistor Tr_{UP}, respectively, and a cathode and an anode of the diode D_{UN} are coupled to the drain and the source of the low-side transistor Tr_{UN}, respectively. The same configuration is applied to the V-phase and the W-phase.

Further, FIG. 2 also illustrates gate resistances R_{UP}, R_{UN}, R_{VP}, R_{VN}, R_{WP}, and R_{WN} respectively provided in signal lines for applying a gate drive signal from the gate drive circuit 15 to the gates of the transistors Tr_{UP}, Tr_{UN}, Tr_{VP}, Tr_{VN}, Tr_{WP}, and Tr_{WN}.

The microprocessor 14 contains an analog/digital (A/D) conversion circuit 16 configured to detect the power supply voltage V_{DD}, and A/D conversion circuits 16_{U}, 16_{V}, 16_{W} configured to respectively detect terminal voltages of U-phase, V-phase and W-phase coils of the motor 1.

In the control device, a voltage divider circuit where the resistances R₁, R₂ are coupled in series is coupled in parallel to the DC power supply 2, and voltages of the resistances R₁, R₂ at the coupling points are input to the A/D conversion circuit 16. A terminal of the U-phase coil of the motor 1, that is, an end coupled to the transistors Tr_{UP}, Tr_{UN} out of ends of the U-phase coil, is coupled with one end of the voltage divider circuit where the resistances R_{U1}, R_{U2} are coupled in series, the other end of the voltage divider circuit is grounded, and voltages of the resistances R_{U1}, R_{U2} at coupling points, that is, the divided terminal voltages are input to the A/D conversion circuit 16_{U}. Likewise, a voltage divider circuit comprised of the resistances R_{V1}, R_{V2} is provided for the terminal of the V-phase coil, a terminal voltage divided by the voltage divider circuit is input to the A/D conversion circuit 16_{V}, a voltage divider circuit comprised of the resistances R_{W1}, R_{W2} is provided for the terminal of the W-phase coil, and a terminal voltage divided by the voltage divider circuit is input to the A/D conversion circuit 16_{W}.

If any phase-coil of the motor 1 does not serve as a current path for driving the motor 1, a voltage based on the back electromotive force resulting from the rotation of the motor 1 appears at the terminal of that phase-coil. This voltage is a voltage proportional to the rotational speed of the motor 1. The microprocessor 14 also controls an energization timing for the coil of each phase of the motor 1, and thus, the microprocessor 14 can understand the terminal voltage of which phase-coil corresponds to the rotational speed in each time point, and from a voltage value obtained via the A/D converter circuits 16_{U}, 16_{V}, 16_{W}, the rotational speed of the motor 1 based on the terminal voltage of a coil of at least one phase of the motor 1 can be obtained. It is noted that in this control device, the resistances R₁, R₂ and the A/D conversion circuit 16 constitute a power supply voltage detector configured to detect a power supply voltage to be used for driving the motor 1. Components of the microprocessor 14 other than the A/D conversion circuit 16 constitute a controller configured to drive the motor 1.

Next, the microprocessor 14 will be described. The microprocessor 14 is a general one used for driving and controlling a brushless DC motor, and in the control device of the present embodiment, specifically, the microprocessor 14 switches between the synchronous rectification PWM drive and the one-side PWM drive described above to drive the motor. In the control device, a deceleration mode is set as a mode for switching from the synchronous rectification PWM drive to the one-side PWM drive. The deceleration mode indicates that the motor 1 is decelerating. The microprocessor 14 monitors the rotational speed of the motor 1, based on the voltage value obtained via the A/D conversion circuit 16u, 16v, 16w, and evaluates the speed reduction rate based on the rotational speed. The speed reduction rate mentioned here is a value indicating how much the rotational speed of the motor 1 is decreased per unit time, and the greater the level of the deceleration of the motor 1 is, the larger the positive value is. In practice, in the microprocessor 14, the rotational speed of the motor 1 is sampled in a fixed cycle, and the speed reduction amount, that is, a value obtained by subtracting the rotational speed acquired by a current sampling from the rotational speed acquired by the previous sampling, can be used as the speed change rate. In this case, to avoid an influence due to noise or the like, a speed reduction amount, that is, a difference between a sampling before last or older (for example, a sampling before last) and a current sampling, may be used as the speed change rate. The speed reduction amount determined based on samplings in a fixed cycle is used as the speed reduction rate, and thus, the calculation of division can be omitted.

The microprocessor 14 determines whether or not the speed reduction rate is equal to or greater than a prescribed value (first threshold value), and sets the deceleration mode if the value is equal to or greater than the prescribed value, and releases the deceleration mode if the value is less than the prescribed value. The prescribed value is a value prescribed to determine whether or not the motor 1 is in a decelerating state. The determination based on the prescribed value is performed each time the speed reduction rate is acquired. A storage region for storing a deceleration mode flag is set inside the microprocessor 14, if the deceleration mode is set, the deceleration mode flag is turned on (ON), and if the deceleration mode is released, the deceleration mode flag is turned off (OFF). The microprocessor 14 drives the motor 1 by the synchronous rectification PWM drive if the deceleration mode is released. If the deceleration mode is set, the microprocessor 14 compares a value of the power supply voltage V_{DD} detected via the A/D conversion circuit 16 with a determination level (second threshold value), and if the power supply voltage is equal to or greater than the determination level, the microprocessor 14 switches the drive of the motor 1 from the synchronous rectification PWM drive to the one-side PWM drive. The determination level is a voltage value prescribed depending on a tolerance level of the rise of the power supply voltage due to the regenerative current. If the deceleration mode is set even if the power supply voltage drops below the determination level after switching to the one-side PWM drive, the microprocessor 14 does not switch the one-side PWM drive to the synchronous rectification PWM drive. Of course, if the deceleration mode is released while the one-side PWM drive is performed, the microprocessor 14 switches the drive of the motor 1 from the one-side PWM drive to the synchronous rectification PWM drive.

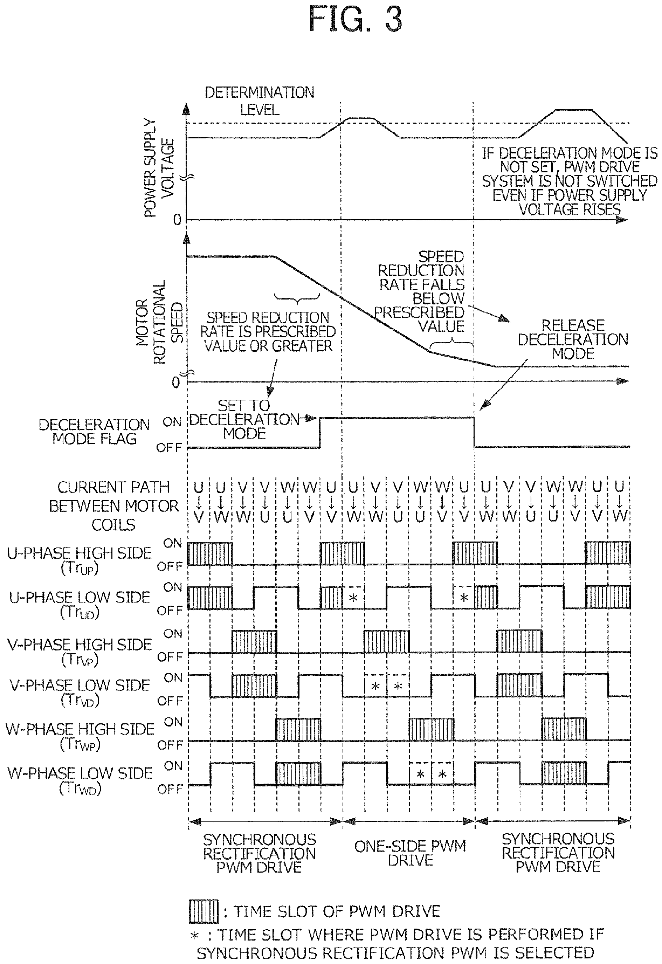

FIG. 3 is a diagram explaining a switching operation of the PWM drive described above. In the motor 1, when the current is applied to the U-phase, V-phase, and W-phase coils, the current path is switched in the order of U -> V, U -> W, V -> W, V -> U, W -> U, W - > V, and then, the path is switched again back to the first U -> V to generate a rotating magnetic field for one cycle, and the rotor rotates to follow this rotating magnetic field. Here, a case is considered where the rotational speed of the motor decelerates from a certain speed at a certain speed reduction rate, and then, the speed reduction rate decreases, and finally changes to another constant speed. At this time, it is assumed that the power supply voltage changes as illustrated in FIG. 3. FIG. 3 illustrates whether the deceleration mode is on or off, a current path between the coils of the motor, and a state of each of the transistors. The state of each of the transistors is indicated by whether the transistor is turned on (conductive), turned off (cut off), or PWM driven for each time slot divided by switching of the current path between the coils in the motor 1.

In an initial state where the rotational speed of the motor 1 is constant, the deceleration mode flag is turned off and the deceleration mode is released, and as understood from FIG. 3 that, for example, in the U-phase, the high-side transistor Tr_{UP} and the low-side transistor Tr_{UN} are simultaneously PWM driven (it is noted that the relationship between the operations of the PWM drive of the two transistors has the inverse logic), the motor 1 is driven by the synchronous rectification PWM drive. Thereafter, when the motor 1 starts to decelerate, the deceleration mode is set and the deceleration mode flag is set to ON since the speed reduction rate at that time is equal to or greater than the prescribed value. At this time, the synchronous rectification PWM drive remains, but then, if the power supply voltage reaches equal to or greater than the determination level, the microprocessor 14 drives the motor 1 by the one-side PWM drive. In FIG. 3, a time slot indicated by "*" for each of the transistors indicates a time slot in which the transistor is turned off since the one-side PWM drive is selected although the PWM control is performed if the synchronous rectification PWM drive is selected. After the PWM drive is switched to the one-side PWM drive, the deceleration mode continues even if the power supply voltage falls below the determination level, and the drive of the motor 1 remains the one-side PWM drive. Thereafter, if the speed reduction rate falls below the prescribed value, the microprocessor 14 releases the deceleration mode and switches the PWM drive to the synchronous rectification PWM drive to drive the motor 1. Thereafter, although the rotational speed of the motor 1 is constant, the deceleration mode is not set even if the power supply voltage reaches equal to or larger than the determination level in this state, and therefore, the microprocessor 14 drives the motor 1 still in the synchronous rectification PWM drive.

In the control device according to the present embodiment described above, in the deceleration mode, the PWM drive is switched to the one-sided PWM drive if the power supply voltage reaches equal to or greater than the determination level, and thus, it is possible to prevent an electronic device from being destroyed by increasing the power supply voltage due to a regenerative current generated by the deceleration of the motor 1, and in addition, the PWM drive is not switched to the one-sided PWM drive if the deceleration mode is released, and thus, it is possible to prevent an unnecessary reduction in efficiency.

The control device based on at least an embodiment of the present invention may have a configuration other than that illustrated in FIG. 2. For example, if the motor 1 includes a position sensor such as a Hall element sensor configured to detect a rotor position, the rotational speed of the motor can be detected based on the output of the position sensor. In this case, there is no need to provide a voltage divider circuit or an A/D conversion circuit configured to detect the terminal voltage, and the rotational speed of the motor can be detected more exactly as a result of not being affected by noise or the like superimposed on the terminal voltage.

In the control device illustrated in FIG. 2, the power supply voltage is detected by the A/D conversion circuit 16, and the detected value of the power supply voltage is compared with the determination level by a software process. Instead of such a configuration, a comparator configured to compare the power supply voltage with the determination level may be provided as a hardware circuit, and the output of the comparator may be input to the microprocessor 14. When the comparator being a hardware circuit is employed, the microprocessor 14 can be caused to perform an interrupt process, based on the output of the comparator, and thus, it is possible to immediately switch the PWM drive to the one-side PWM drive if the power supply voltage rises due to the regenerative current.

### [Description of the Symbols]

- 1 ...: Motor
- 2 ...: DC power supply
- 11 ...: inverter circuit
- 14 ...: microprocessor
- 16, 16u, 16v, 16w ... A/D: conversion circuit

## Claims

1. A control method of controlling a voltage to be applied to a coil of each phase of a motor (1) being a brushless DC motor by PWM drive, **characterized in that**, the method comprising:
detecting a power supply voltage (V_{DD}) to be used for driving the motor (1);
detecting a rotational speed of the motor (1);
evaluating a speed reduction rate, based on the detected rotational speed, transitioning to a deceleration mode when the speed reduction rate is equal to or greater than a first threshold value, and releasing the deceleration mode when the speed reduction rate is less than the first threshold value; and
switching the PWM drive to one-side PWM drive when the power supply voltage (V_{DD}) reaches equal to or greater than a second threshold value during the deceleration mode to drive the motor (1).

2. The control method according to claim 1, wherein a terminal voltage of a coil of at least one phase of the motor (1) is detected to detect the rotational speed.

3. The control method according to claim 1 or 2, wherein the rotational speed is detected for each sampling to calculate a speed reduction amount, and the speed reduction amount is used as the speed reduction rate.

4. A control device for controlling a voltage to be applied to a coil of each phase of a motor (1) being a brushless DC motor by PWM drive, **characterized in that**, the device comprising:
a power supply voltage detector (R₁, R₂, 16) configured to detect a power supply voltage (V_{DD}) to be used for driving the motor (1); and
a controller configured to evaluate a speed reduction rate, based on a detected rotational speed of the motor (1), transition to a deceleration mode when the speed reduction rate is equal to or greater than a first threshold value, release the deceleration mode when the speed reduction rate is less than the first threshold value, and switch the PWM drive to one-side PWM drive when the power supply voltage (V_{DD}) reaches equal to or greater than a second threshold value during the deceleration mode to drive the motor (1).

5. The control device according to claim 4, wherein the controller detects the rotational speed of the motor (1), based on a terminal voltage of a coil of at least one phase of the motor (1).

6. The control device according to claim 4 or 5, wherein the controller is a microprocessor configured to obtain the rotational speed for each sampling to calculate a speed reduction amount, and uses the speed reduction amount as the speed reduction rate to drive the motor (1).
